# EUROPÄISCHE PATENTSCHRIFT

(11) **EP 3 545 674 B1**
(45) Veröffentlichungstag und Bekanntmachung des Hinweises auf die Patenterteilung: **22.12.2021**
(21) Anmeldenummer: 17821460.7
(22) Anmeldetag: 17.11.2017
(51) Int. Cl.: H04N 9/31, G03B 21/13, G03B 21/14, G02B 5/22, G02B 27/00

(54) **VERFAHREN ZUR AUTOMATISCHEN ERZEUGUNG EINER OPTISCHEN BLENDMASKE**
METHOD FOR AUTOMATICALLY PRODUCING AN OPTICAL BLEND MASK
PROCÉDÉ DE PRODUCTION AUTOMATIQUE D'UN MASQUE DE FUSION OPTIQUE

(30) Priorität: 23.11.2016 DE 102016013994
(43) Veröffentlichungstag der Anmeldung: 02.10.2019
(73) Patentinhaber: Domeprojection.com GmbH, 39112 Magdeburg (DE)
(72) Erfinder: BEIER, Daniel, 39108 Magdeburg (DE); GULAMHUSSENE, Danilo, 39114 Magdeburg (DE); BODE, Christoph, 39104 Magdeburg (DE); GULAMHUSSENE, Gino, 39106 Magdeburg (DE); STEINMANN, Christian, 39106 Magdeburg (DE)
(74) Vertreter: Fischer, Volker
(86) Internationale Anmeldenummer: PCT/DE2017/000389
(87) Internationale Veröffentlichungsnummer: WO 2018/095449

(56) Entgegenhaltungen:
- GB-A- 2 508 429
- US-A1- 2006 227 301
- US-A1- 2007 024 826
- US-A1- 2014 354 957

## Beschreibung

Die Erfindung betrifft ein Verfahren zur automatischen Erzeugung einer optischen Blendmaske, welche im Strahlengang eines Projektors, in einem mindestens zwei Projektoren umfassenden Projektionssystem, eingesetzt wird.

Großflächige Projektionen, welche mittels sogenannter Projektionssysteme erzeugt werden, setzen sich zumeist aus mehreren kleinen Projektionen oder Teilbildern zusammen, wobei die einzelnen Projektionskanäle, welche die Teilbilder erzeugen, in einer an die Projektionsfläche angepassten Weise geometrisch verzerrt und überblendet werden. Auf diese Art kann beispielsweise mittels vier Projektoren, welche jeweils ein Teilbild der großflächigen Projektion erzeugen, eine entsprechend großflächige homogene Projektion oder Darstellung auf der Projektionsfläche erzeugt werden.

Die für das Verzerren und das Überblenden (Blending) benötigten Informationen werden beispielsweise durch ein sogenanntes Einmessen der Gesamtprojektion bzw. des Projektionssystems ermittelt. Hierzu werden auf die Projektionsfläche vorgegebene Muster projiziert. Diese Muster markieren Punkte auf der Projektionsfläche oder sind derart gestaltet, dass sich Punkte aus ihnen ableiten lassen. Derart abgeleitete Punkte können aus zwei sich kreuzenden Linien oder beispielsweise aus einer Ecke einer ebenen geometrischen Figur gewonnen werden.

Die räumlichen Positionen (X-, Y- und Z-Koordinate) dieser markierten Punkte werden, beispielsweise mittels zweier Kameras, vermessen. Auf Basis dieses Punkte-Modells lässt sich die Überlappung der einzelnen Projektoren an jeder Stelle auf der Projektionsfläche (Screen) ermitteln und daraus ein Blending für jeden an der Erzeugung der großflächigen Projektion beteiligten Projektor ableiten. Dieses Blending wird durch die automatisch zu erzeugende optische Blendmaske realisiert.

Nach dem bisher bekannten Stand der Technik werden Signalveränderungen der Videosignale der einzelnen Videokanäle der Projektoren, welche für je eine Teilbilderzeugung benötigt werden, nach einer Bilderzeugung mittels geeigneter Verfahren zur Verzerrung und zum Blending der Videosignale durchgeführt. Nachfolgend wird das derart veränderte Signal einem Projektor als Eingangssignal zugeführt, welcher das entsprechende Teilbild auf der Projektionsfläche erzeugt. Dieser Vorgang der Signalverarbeitung oder Signalveränderung wird üblicherweise für jeden der an der Erzeugung der Projektion beteiligten Videokanäle, also für jedes Teilbild, durchgeführt.

Somit werden die zur Erzeugung der großflächigen Projektion auf einer Projektionsfläche notwendigen Veränderungen der Videosignale, beispielsweise zur Anpassung an die gegebene Projektionsfläche und/oder an ein Blending, direkt auf das Eingangssignal jedes Projektors aufgeprägt und beeinflussen die Projektion der dargestellten Teilbilder.

Alternativ ist es bekannt, dass Blending mittels optischer Blendmasken zu realisieren ist, welche im Strahlengang vor dem jeweiligen Projektor angeordnet werden.

Unabhängig vom gewählten Verfahren für das Verzerren und/oder das Blending muss für den Fall, dass sich eine oder mehrere Projektionen oder Projektionskanäle durch zum Beispiel eine Lageveränderung eines oder mehrerer Projektoren verändern, ein erneutes Einmessen des Projektionssystems erfolgen. Mit den neuen Daten der Einmessung muss auch die Verzerrung und das Blending korrigiert werden. Neben einer Lageveränderung ist in der Regel auch bei einem Austausch eines Leuchtmittels in einem Projektor eine erneute Einmessung und Einstellung des Projektionssystem erforderlich.

Prinzipbedingt können die meisten Projektoren keine Bilder oder Teilbilder projizieren, welche in einem keine Helligkeit aufweisenden Bildteil vollständig schwarz dargestellt werden. Der Grund hierfür liegt in der im Projektor angeordneten Lichtquelle, welche immer eingeschaltet ist und der Lichtweg nicht vollständig blockiert werden kann. Aus diesem Grund weisen Projektoren eine sogenannte Resthelligkeit, beispielsweise bei der Darstellung einer schwarzen Bildfläche, auf.

Großflächige Projektionen mittels mehrerer Projektoren werden meist derart erzeugt, dass sich die Teilbilder zumindest teilweise in ihren Randbereichen überlappen und eine sogenannte Blendzone entsteht. Bei derartigen Überlappungen der Bildbereiche in der Blendzone überlagern sich die Resthelligkeiten der Projektoren auf unvorteilhafte Weise. Insbesondere bei der Darstellung sehr dunkler Bildbereiche in den Überlappungen der Teilbilder werden die resultierenden Resthelligkeiten von einem Betrachter als sehr störend empfunden, da das Blending keine Wirkung auf das Restlicht hat.

Eine Lösung für das Problem dieser Resthelligkeit besteht darin, durch den Einsatz einer optischen Blendmaske im Lichtweg die Restlichtprojektion zu reduzieren oder zu vermeiden. Für den Fall einer großflächigen Projektion mittels beispielsweise vier Projektoren sind somit vier optische Blendmasken, also eine Blendmaske je Projektor, vorzusehen.

Nach dem Stand der Technik werden diese optischen Blendmasken streng nach einem Design oder nach Daten entsprechender Testprojektionen gefertigt. Da sich der reale Projektionsaufbau immer vom Design bzw. von einer ideal geplanten Projektion unterscheidet, funktionieren die so hergestellten optischen Blendmasken unterschiedlich gut.

Die Ursachen für die eingeschränkte Funktionalität derartiger optischer Blendmasken liegt einerseits darin begründet, dass es in der Praxis sehr schwierig ist, ein Projektionssystem exakt nach einem vorgegebenen Design aufzubauen. Andererseits kann ein sogenanntes individuelles Verzeichnen eines Projektors, welches durch Ungenauigkeiten bei der Fertigung der Linsen oder Linsen-Paare eines Projektors hervorgerufen wird, nicht oder nur mit einem zu großen Aufwand in einem Design berücksichtigt werden.

Aus der EP 1 422 939 A2 ist ein mehrkanaliges Projektionssystem und ein Verfahren zur Erzielung großer Projektionsflächen bekannt. Um eine kostengünstige, großflächige Projektion bereitzustellen, wird ein mehrkanaliges Projektionssystem mit zumindest zwei nebeneinander oder übereinander angeordneten Projektoren vorgeschlagen, wobei ein einzelner Projektor jeweils einen Teil des Bildes projiziert. Das beschriebene Projektionssystem zeichnet sich dadurch aus, dass für die zumindest zwei Projektoren ein identisches, das zu projizierende Gesamtbild darstellendes Eingangssignal anliegt, wobei die Pixelauflösung des darzustellenden Bildes größer als die Auflösung der Projektionspanele der zumindest zwei Projektoren ist und Mittel umfasst sind zum elektronischen Verschieben des Bildes auf dem jeweiligen Panel der Projektoren, derartig, dass die durch die einzelnen Projektoren projizierten Teilbilder zusammen das zu projizierende Gesamtbild ergeben.

Aus der WO 2012/076706 A1 ist eine optische Maske bekannt, welche zur Verwendung bei der Darstellung eines aus mehreren sich überlappenden Einzelbildern zusammengesetzten, Gesamtbildes geeignet ist. Die Maske beinhaltet eine Anordnung von länglichen Gleitelementen, welche nebeneinander auf einem Träger angeordnet sind, wobei jedes Gleitelement entlang einer Achse und unabhängig voneinander verschiebbar angeordnet ist. Vorgesehen ist es, eine oder mehrere dieser Masken beispielsweise in einem Lichtstrahl eines Projektors anzuordnen und somit die Übertragung des Lichts zu verändern.

Die US 6,513,938 B2 betrifft ein Projektionssystem mit mehreren Bildprojektionsmitteln, bei welchem von einer Vielzahl von Bildprojektionsmitteln projizierte, sich überlappende Teilbilder so angeordnet werden, dass ein Bild als Ganzes erzeugt wird. Die Aufgabe dieser Druckschrift kann darin gesehen werden, ein Projektionssystem bereitzustellen, welches es ermöglicht, ein aus einer Vielzahl von Teilbildern bestehendes Gesamtbild mit einem nahezu gleichmäßigen Leuchtdichtepegel über die gesamte Projektionsfläche hinweg bereitzustellen.

Die Anordnung umfasst mehrere Bildprojektionsmittel mit einer oder mehreren Abfangplatten, welche zwischen dem Bildprojektionsmittel und der Projektionsfläche angeordnet sind, ein Leuchtdichte-Erfassungsmittel, ein Verschiebungs-Berechnungsmittel sowie ein Steuermittel.

Offenbart ist es, beispielsweise eine L-förmige Abfangplatte vor einem von vier Bildprojektionsmitteln zum Einsatz zu bringen, welche zur Einstellung der benötigten Leuchtdichte vor dem Bildprojektionsmittel verschiebbar angeordnet ist. Vorgesehen ist es auch, diese Verschiebung mittels eines von dem Steuermittel erzeugten Steuersignals und entsprechender Antriebsmittel, welche dazu geeignet sind, die Position der Abfangplatte vor dem Bildprojektionsmittel in vertikaler und horizontaler Richtung zu verändern, zu automatisieren.

Aus der EP 1 613 071 A1 ist ein Verfahren zum Liefern einer Dämpfung der Lichtstärke eines Bildes in einem Kantenbereich eines von mehreren kachelartig angeordneten Teilbildern in einer Gesamtprojektion bekannt, die von einem Projektionsanzeigesystem angezeigt werden. Insbesondere betrifft die Druckschrift ein Verfahren zum Erlangen eines verbesserten Verbindens bzw. Blendings von kachelartig angeordneten Bildern, die von einem Projektionsanzeigesystem angezeigt werden. Das Verfahren stellt sowohl ein gutes Schwarzwert-Blending als auch eine hohe Flexibilität bereit.

Vorgesehen ist, eine Veränderung einer ersten Lichtstärke durch eine elektronische Weichkanteneinrichtung über einen ersten Bruchteil des Kantenbereiches von einem ersten Stärkewert zu einem ersten Bruchteil des ersten Stärkenwertes und eine graduelle Veränderung der ersten Lichtstärke durch eine optische Weichkanteneinrichtung über einen zweiten Bruchteil des Kantenbereiches von einem zweiten Bruchteil des ersten Stärkewertes zu einem dritten Bruchteil des ersten Stärkewertes zu erreichen. Dabei soll im ersten Bruchteil und im zweiten Bruchteil des Kantenbereiches die optische Abschwächung der Lichtstärke des Bildes im Wesentlichen konstant sein. Die optische Weichkanteneinrichtung umfasst mindestens eine Maske.

In einer besonderen Ausführung ist auch ein zwischen dem ersten und dem zweiten Bruchteil angeordneter dritter Bruchteil vorgesehen, in welchem sowohl die elektronische Weichkanteneinrichtung als auch die optische Weichkanteneinrichtung zur Beeinflussung der Lichtstärke des dritten Bruchteils zum Einsatz kommen.

Die US 2014/354957 A1 offenbart ein Projektionssystem, welches wenigstens zwei Projektoren umfasst, wobei der erste Projektor dazu geeignet ist, ein erstes Bild zu projizieren, und der zweite Projektor dazu geeignet ist, ein zweites Bild zu projizieren. Das Projektionssystem umfasst auch eine optische Maske, welche als ein Mischfilter mit einem kontinuierlichem Tonverlauf gestaltet ist. Diese optische Maske wird mittels eines Druckverfahrens unter Verwendung einer flüssigen Tinte oder eines Toners auf einem transparenten Substrat hergestellt, wobei durch einen Farbverlauf eine fortlaufende Tonvariation bereitgestellt wird.

Aus der US 2007/024826 A1 ist ein optomechanischer Filter zum Mischen von Bildern von einem digitalen Projektor bekannt. Offenbart ist eine Filtermontagevorrichtung zur Verwendung mit einem optischen Filter, welcher zwischen einer Projektorlinse und einem Bildschirm angeordnet ist. Die Filtermontagevorrichtung umfasst eine Metallscheibe, die mit der Projektorlinse verbunden ist, und eine Baugruppe, die magnetisch mit der Metallscheibe verbunden ist, um das optische Filter in einem vorbestimmten Abstand von der Projektorlinse zu montieren.

Die Nachteile des Standes der Technik bestehen somit darin, dass keine optimale Kompensation für das Problem der auftretenden Resthelligkeit in den Blendzonen einer großflächigen Projektion gegeben ist. Insbesondere kann eine Kompensation mittels einer optischen Blendmaske nicht an den realen Projektionsaufbau, welcher sich immer zumindest teilweise von einem geplanten Design unterscheidet, und/oder an vorhandene Verzeichnungen der Projektoren, welche in der Praxis ebenfalls immer auftreten, automatisch angepasst werden. Alternativ besteht nur die Möglichkeit, eine Anpassung der optischen Blendmasken und des Blendverlaufes manuell vorzunehmen. Zu diesem Zweck können Elemente, welche das Licht in seiner Ausbreitung beeinflussen, in den Strahlengang, beispielsweise im Bereich der Blendmasken, eingebracht werden. Eine derartige Abstimmung der Blendmaske ist eine manuell vorzunehmende Justagearbeit, welche einen erfahrenen Fachmann voraussetzt und seiner subjektiven Beurteilung unterliegt.

Die Aufgabe der Erfindung besteht darin, ein Verfahren zur Herstellung einer optischen Blendmaske anzugeben, mit welchem eine optische Blendmaske automatisch erzeugt wird, welche an einen individuellen Istzustand eines Projektionsaufbaus sowie an Verzeichnungen, welche von mindestens einer Linse eines Projektors hervorgerufen werden, angepasst ist.

Die Aufgabe wird durch ein Verfahren mit den Merkmalen gemäß Patentanspruch 1 gelöst. Weiterbildungen sind in den abhängigen Patentansprüchen 2 bis 8 angegeben.

Gemäß der vorliegenden Erfindung ist es vorgesehen, dass eine oder mehrere optische Blendmasken auf der Basis von Daten, welche bei einem Einmessen eines Istzustandes eines Projektionsaufbaus ermittelt wurden, berechnet und gefertigt werden. Jede derart gefertigte optische Blendmaske wird nach ihrer Herstellung an einer definierten Stelle im Strahlengang eines zugehörigen Projektors angeordnet oder montiert.

Die Besonderheit am erfindungsgemäßen Verfahren ist, dass unter Zuhilfenahme von auf die Projektionsfläche und somit auch auf der in der Blendmaskenebene liegenden abgebildeten Projektionsfläche projizierten Punkten innerhalb von Mustern, deren räumliche Position vermessen wird, ein Blending berechnet und dieses berechnete Blending auf eine optischen Blendmaske, die sich im Strahlengang des Projektors befindet, übertragen oder gedruckt wird. Dazu wird die Position eines die zu erzeugende optische Blendmaske aufnehmenden Rahmens oder des Rahmens mit einer Front- oder Rückprojektionsfläche im Strahlengang vermessen. Zur Realisierung dieser Vermessung wird der Rahmen und/oder die Frontoder Rückprojektionsfläche mit sogenannten Messmarken versehen. Daraus kann die Position der Blendmaske sowie der Blendverlauf auf der automatisch zu erzeugenden Blendmaske berechnet werden.

Mit derartig hergestellten optischen Blendmasken wird der Nachteil, welche nach einem vorgegebenen Design berechnete und gefertigte optische Blendmasken aufweisen, deutlich verringert oder beseitigt ,ohne dass eine manuelle Einrichtung erforderlich ist.

Dies gilt sowohl für die Ungenauigkeit der optischen Blendmaske, welche daraus resultiert, dass es praktisch sehr schwierig ist, das Projektionssystem exakt nach Design aufzubauen, als auch für den Anteil der Ungenauigkeit, welcher beispielsweise durch ein individuelles Verzeichnen eines jeden Projektor-Linsen-Paares hervorgerufen wird.

Beide Ungenauigkeiten oder Störgrößen werden bei einem Entwurf der optischen Blendmaske auf der Grundlage von Daten, welche durch das Einmessen, also das Erfassen des realen Ist-Zustandes des Projektionssystems, erzeugt werden, berücksichtigt. Derart wird eine optische Blendmaske erzeugt, welche an den zugehörigen Projektor und seine Position in Bezug auf die Projektionsfläche bzw. das Projektionssystem individuell angepasst ist.

Zur Erzeugung der für die Herstellung der optischen Blendmasken notwendigen Daten werden die nachfolgend erläuterten Verfahrensschritte durchlaufen:
Im ersten Verfahrensschritt wird auf Grundlage einer Einmessung der Gesamtprojektion das Blending für jede Einzelprojektion berechnet. Das Blending wird in Bezug auf das Bildsignal berechnet. In einem nachfolgenden Verfahrensschritt werden die Verzeichnungen aller Projektoren-Linsen-Paare in einer sogenannten Blendmaskenebene, welche sich in einer Ebene, typischerweise orthogonal zur optischen Achse, unmittelbar vor dem jeweiligen Projektor-Linsen-Paar befindet, vermessen. Das ermöglicht es zu bestimmen, an welcher Stelle und mit welcher Verzerrung das berechnete Blending als optische Blendmaske platziert werden muss.

Für diese Vermessung der Verzeichnung wird eine Front- oder Rückprojektionsfläche vor jedem Projektor an einer Stelle im Strahlengang des Projektors angeordnet (Blendmaskenebene), an welcher die zu erzeugende optische Blendmaske nach ihrer Herstellung zum Einsatz kommt.

Auf dieser Front- oder Rückprojektionsfläche befinden sich mehrere optische Marker. Die Front- oder Rückprojektionsfläche wird jeweils von einem Halter oder Rahmen, welcher vor dem jeweiligen Projektor angeordnet ist, aufgenommen. Die Front- oder Rückprojektionsfläche ist aus dem Halter herausnehmbar und kann durch die fest mit dem Projektor oder einem anderen Fixpunkt verbundene Halterung immer wieder exakt in dieselbe Position gebracht werden. Nach der Fertigstellung der optischen Blendmaske wird diese an Stelle der Front- oder Rückprojektionsfläche in den Halter oder Rahmen eingesetzt.

Die Marker am Rahmen bilden ein lokales Referenzkoordinatensystem. In diesem Koordinatensystem wird mit Hilfe einer Einmessung die Verzeichnung des Projektors bestimmt. Gleichzeitig wird dabei die Position der optischen Blendmaske innerhalb des lokalen Referenzkoordinatensystems bestimmt.

Zur Durchführung der Einmessung werden Muster, aus denen Punkte abgeleitet werden können, auf die in der Blendmaskenebene angeordnete Front- oder Rückprojektionsfläche projiziert, welche mit einer Kamera aufgenommen werden und einen Bezug der Front- oder Rückprojektionsfläche zu dem lokalen Referenzkoordinatensystem herstellen.

Mindestens eine derartige Kamera kann beispielsweise vor oder hinter der Blendmaskenebene angeordnet und auf die in der Blendmaskenebene angeordnete Front- oder Rückprojektionsfläche ausgerichtet werden.

Die Daten einer verfahrensgemäß berechneten optischen Blendmaske werden mittels einer geeigneten Technik auf ein transparentes Trägermedium, welches beispielsweise eine Folie oder ein Glas sein kann, übertragen.

In einer alternativen Ausführung ist es vorgesehen, die im Verfahren gewonnenen Daten beispielsweise zur Ansteuerung eines an der Stelle der optischen Blendmaske vor dem Projektor angeordneten Displays zu nutzen. Hierfür kann jedes Display genutzt werden, welches vom Licht des Projektors durchdrungen werden kann. Ebenso wie bei einer hergestellten optischen Blendmaske werden durch die Daten Pixel im Display mit einem Helligkeitswert festgelegt, wobei eine Reduzierung des Helligkeitswerts zu einer Dämpfung des durchdringenden Lichts an dieser Stelle führt. Ein derartiges Display kann beispielsweise ein sogenanntes DID-Display (englisch: digital information display, DID), ein transparentes LCD-Display (englisch: liquid crystal display, LCD) oder ein transparentes OLED-Display (englisch: organic light emitting diode, OLED) sein.

Die hergestellten optischen Blendmasken enthalten Passmarken, welche exakt mit den Markern der Rahmen korrespondieren. Die optischen Blendmasken können somit sehr genau im Rahmen fixiert werden und nehmen somit eine exakte Position im Referenzkoordinatensystem ein.

Die optischen Blendmasken werden in Halterungen geschoben, die sich in einer fixen Position vor dem Projektor befinden. Über diese transitive, relative Positionsvorgabe wird die Blendmaske exakt im Projektionsweg, also im Strahlengang des jeweiligen Projektors vor diesem zugehörigen Projektor, positioniert. Ablaufgliederung:
1. Einmessung des Projektionssystems und Erzeugung des idealen Blendings
2. Front- oder Rückprojektionsfläche in Rahmen vor einem Projektor anordnen:
   a) Projektion von Mustern, aus denen Punkte abgeleitet werden können,
   b) Aufnahme der aus dem Muster abgeleiteten Punkte, beispielsweise mittels einer Kamera,
   c) Bestimmung der Position der aufgenommen Punkte im lokalen Referenzkoord inatensystem,
   d) Zuordnung zu den projizierten Punkten,
   e) Berechnung der Verzeichnung des Projektors.
3. Berechnung des optischen Blendings:
   a) Positionierung und/oder Transformation des idealen Blendings auf die Blendmaskenebene,
   b) Filterung bzw. Anpassung des idealen Blendings zur Kompensation der Weichzeichnung im Lichtweg, da die optische Blendmaske in der Blendmaskenebene nicht in der Fokusebene des Projektors liegt,
   c) optionale iterative Optimierung der nach den Schritten a) und b) erzeugten optischen Blendmaske, bei welcher die ideale Abbildung des Blendings auf der Projektionsfläche (Blendergebnis) simuliert und mit einem unter Anwendung der bisher erzeugten optischen Blendmaske zu erwartenden Blendings verglichen wird, um die Abweichungen zwischen der idealen Abbildung des Blendings und dem zu erwartenden Blending zu verringern,
   d) Anwendung der im Punkt 2. ermittelten Verzeichnung des Projektors auf das Blending.
4. Ausgabe der erzeugten Daten zur Herstellung der optischen Blendmaske.

Hierbei wird unter einem idealen Blending ein Blending verstanden, welches eine absolut fehlerfreie Projektion eines Teilbildes ermöglichen würde. Das Verfahren ermittelt automatisch Daten, mit welchen eine optische Blendmaske hergestellt werden kann, welche in ihren Eigenschaften dem idealen Blending sehr nahe kommt.

Die iterative Optimierung im Punkt 3c ist notwendig, um Störungen bei der Darstellung der großflächigen Projektion 5, welche durch Beugungseffekte und/oder flächige Lichtquellen hervorgerufen werden, zu verringern.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: eine Prinzipdarstellung einer großflächigen Projektion auf einer gewölbten Projektionsfäche mit mehreren Projektoren,
- Fig. 2:: eine Darstellung der Teilbilder der großflächigen Projektion,
- Fig. 3:: eine Darstellung möglicher Signalverarbeitungsschritte zur Erzeugung von Teilbildern einer großflächigen Projektion,
- Fig. 4:: eine großflächige Projektion mittels zweier Projektoren mit einer zwischen den erzeugten Teilbildern liegenden Blendzone,
- Fig. 5:: eine Darstellung von vier optischen Blendmasken, welche bei der Erzeugung einer großflächigen Projektion mittels vier Projektoren genutzt werden,
- Fig. 6:: einen von mehreren Projektoren zur Erzeugung einer großflächigen Projektion mit einer im Strahlengang des Projektors angeordneten optischen Blendmaske und
- Fig. 7:: die Positionierung einer Front- oder Rückprojektionsfläche in einem Rahmen im Strahlengang eines Projektors vor einer Projektionsfläche.

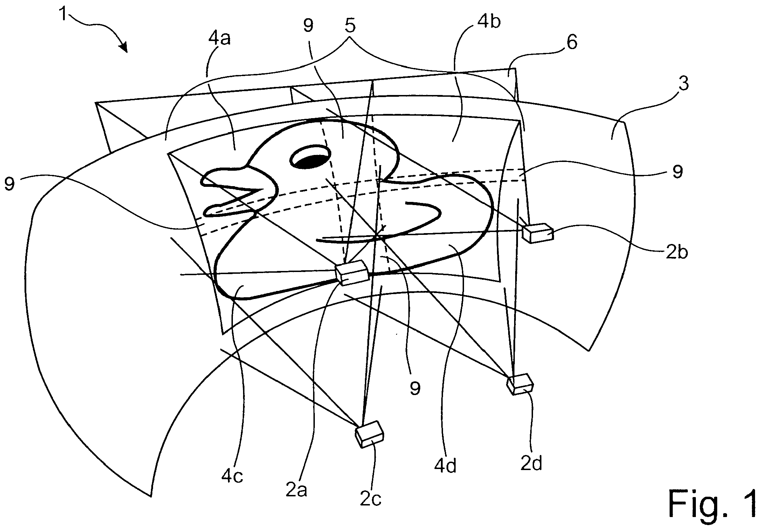

In der Fig. 1 ist ein Projektionssystem 1, welches beispielhaft vier Projektoren 2a, 2b, 2c, 2d umfasst, dargestellt. Jeder Projektor 2a, 2b, 2c, 2d erzeugt auf der Projektionsfläche 3 je ein Teilbild 4a, 4b, 4c. 4d, welche zusammengesetzt eine großflächige Projektion 5 ergeben. Die Erzeugung dieser großflächigen Projektion 5 erfolgt derart, dass zwischen zwei benachbarten Teilbildern 4a, 4b, 4c, 4d eine Blendzone 9 entsteht, in welcher sich Bildanteile der benachbarten Teilbilder 4a, 4b, 4c, 4d überlagern. Die Erzeugung der für die Ansteuerung der Projektoren 2a, 2b, 2c, 2d benötigten Bild- oder Videosignale der Teilbilder 4a, 4b, 4c, 4d erfolgt in einer geeigneten zentralen Signalerzeugungseinheit, welche hier nicht näher beschrieben wird, da sie keinen Einfluss auf die Ausführungen zur vorliegenden Erfindung hat.

Die Erzeugung der benötigten Teilbilder 4a, 4b, 4c, 4d erfolgt in der Signalerzeugungseinheit ursprünglich derart, dass die großflächige Projektion 5 nur auf einer ebenen Projektionsfläche 6, welche in der Fig. 1 nur zur besseren Veranschaulichung dargestellt ist, ohne Fehler in der Darstellung projiziert werden kann.

Um eine fehlerfreie Darstellung auf der gekrümmten Projektionsfläche 3 zu ermöglichen, wird das gesamte Projektionssystem 1 eingemessen. Bei diesem Einmessen werden Daten erzeugt, welche es ermöglichen, die Teilbilder 4a, 4b, 4c, 4d derart zu verzerren, dass diese auf der gekrümmten Projektionsfläche 3 für einen Betrachter derartig dargestellt werden, dass sie von einem Betrachter originalgetreu, ohne unerwünschte Verschiebungen oder Verzerrungen wahrgenommen werden.

Neben dieser Verzerrung der Teilbilder 4a, 4b, 4c, 4d werden die Signale der Teilbilder 4a, 4b, 4c, 4d auch derart verändert, dass diese in den Blendzonen 9 so genau überlagert werden, dass der Betrachter die Teilbilder 4a, 4b, 4c, 4d nicht mehr einzeln oder getrennt voneinander wahrnehmen kann und eine zusammenhängende großflächige Projektion 5 erscheint. Hierzu ist auch das Blending, also eine Anpassung der Helligkeit der Teilbilder 4a, 4b, 4c, 4d innerhalb der Blendzonen 9, vorzunehmen.

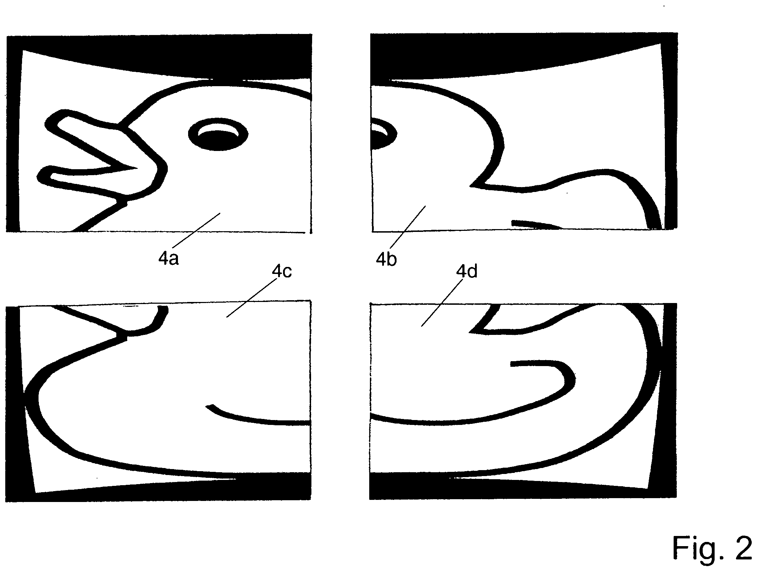

In der Fig. 2 sind die Teilbilder 4a, 4b, 4c, 4d der großflächigen Projektion 5 in jeweils einzelnen Abbildungen dargestellt. Deutlich zu erkennen ist beispielsweise an den Teilbildern 2a und 2b, dass die Teilbilder 2a und 2b an ihrer gemeinsamen Seite nur zum Teil übereinander geschoben eine fehlerfreie Abbildung bewirken können. Im Beispiel der Teilbilder 4a und 4b ist deutlich zu erkennen, dass das Auge der dargestellten Ente in eine Übereinstimmung gebracht werden muss, um eine fehlerfreie großflächige Projektion 5 zu erhalten.

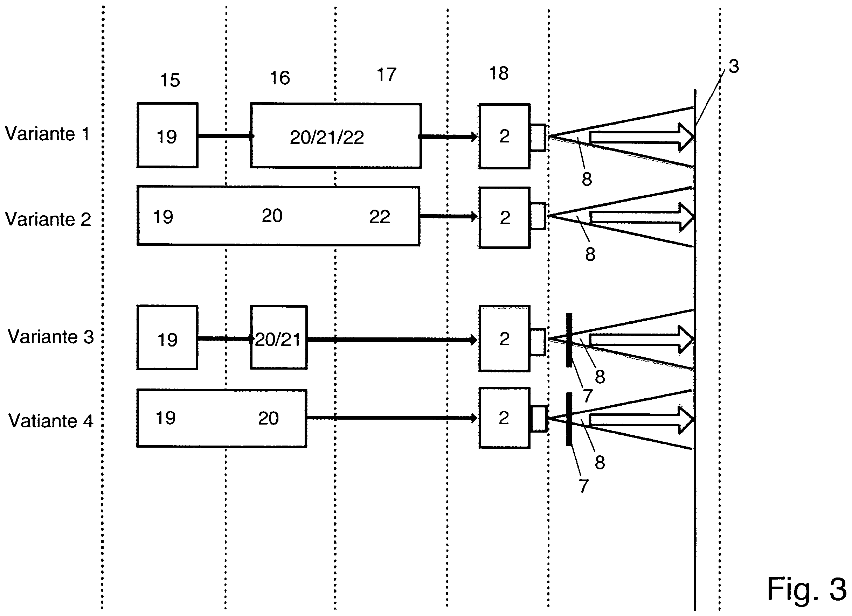

In der Fig. 3 sind verschiedene Verfahrensabläufe zur Verzerrung und zum Blending der Teilbilder 4a, 4b, 4c, 4d dargestellt. Die Darstellung zeigt die Abschnitte Bildgenerierung 15, Verzerrung 16, Blending 17, Projektion 18 und den jeweiligen Lichtweg 8.

In der ersten Variante (Variante 1) erfolgt nach einer Erzeugung der darzustellenden Bild- oder Videosignale in einer Bildgenerierungseinheit 19, wie beispielsweise in einem Computer, eine Verzerrung der Teilbilder 4a, 4b, 4c, 4d im Abschnitt 16 zur Anpassung an die Gegebenheiten einer unebenen Projektionsfläche 3. Diese Anpassung erfolgt beispielsweise in einer speziellen Verzerrungseinheit 20 (Warp-Unit) oder in einer Grafikkarte 21. Nachfolgend kommt ein Verfahren zum Blending im Abschnitt 17 zum Einsatz, bevor die derart beeinflussten Signale der Teilbilder 4a, 4b, 4c, 4d im Abschnitt 18 mittels je eines Projektors 2a, 2b, 2c, 2d über die Lichtwege 8 auf die Projektionsfläche 3 projiziert werden. Das Blending kann in einer speziellen Blendeinheit 22 (Blend-Unit) oder ebenfalls mittels einer Grafikkarte 21 realisiert werden.

In der zweiten Variante (Variante 2) erfolgt die Erzeugung der darzustellenden Bild- oder Videosignale bereits unter Einbeziehung der Verzerrung sowie des Blendings in einem Schritt in einer hierfür geeigneten Einheit wie beispielsweise einem Computer. Diese Einheit bzw. dieser Computer bildet die Bildgenerierungseinheit 19, die Verzerrungseinheit 20 sowie die Blendeinheit 22 ab und setzt die im Abschnitt 16 vorzunehmende Verzerrung des Signals sowie das im Abschnitt 17 vorzunehmende Blending um. Das derart erzeugte Signal eines Teilbilds 4a, 4b, 4c, 4d wird im Abschnitt 18 wiederum mittels eines Projektors 2a, 2b, 2c, 2d über den Lichtweg 8 auf die Projektionsfläche projiziert.

In der dritten Variante (Variante 3) erfolgt die Erzeugung der darzustellenden Bildoder Videosignale in einer Bildgenerierungseinheit 19 wie einem Computer oder einer ähnlichen zur Datenverarbeitung geeigneten Einheit. Das derart erzeugte Signal wird einer Verzerrungseinheit 20 (Warp-Unit) oder einer Grafikkarte zugeführt, in welches das Signal im Abschnitt 16 eine entsprechende Verzerrung zur Anpassung an die Projektionsfläche 3 erfährt. Dieses verzerrte Signal wird im Abschnitt 18 mittels eines Projektors 2a, 2b, 2c, 2d über den Lichtweg 8 auf die Projektionsfläche 3 projiziert, wobei unmittelbar vor einem Projektor 2a, 2b, 2c, 2d je eine optische Blendmaske 7a, 7b, 7c, 7d, welche das Blending des Signals realisiert, im Strahlengang 8 angeordnet ist.

In der vierten Variante (Variante 4) erfolgt die Erzeugung der darzustellenden Bildoder Videosignale einer Bildgenerierungseinheit 19 wie beispielsweise in einem Computer, in welchem das Signal auch eine entsprechende Verzerrung erfährt. Der Computer bildet somit auch die Funktionsweise der Verzerrungseinheit 20 (Warp-Unit) ab. Auch in dieser Variante wird das verzerrte Signal nachfolgend im Abschnitt 18 mittels je eines Projektors 2a, 2b, 2c, 2d über den Lichtweg 8 auf die Projektionsfläche 3 projiziert, wobei unmittelbar vor jedem Projektor 2a, 2b, 2c, 2d je eine optische Blendmaske 7a, 7b, 7c, 7d, welche das Blending des Signals realisiert, im Strahlengang 8 angeordnet ist.

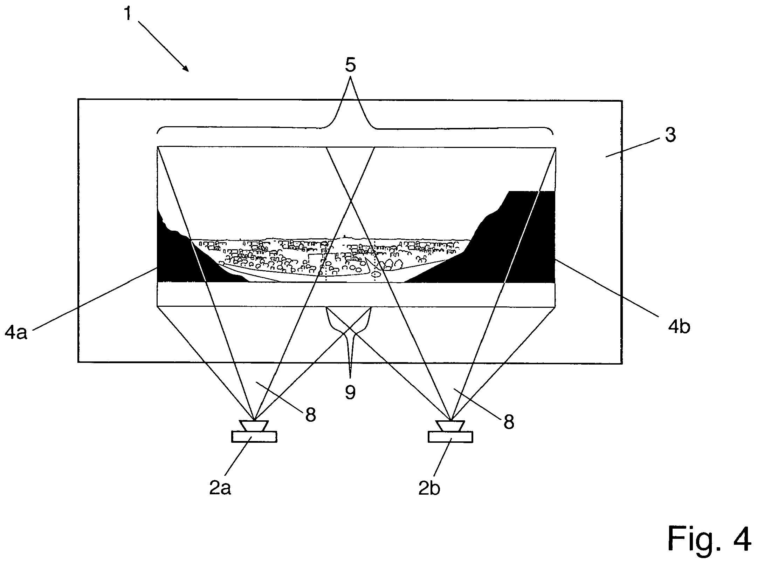

In der Fig. 4 ist eine großflächige Projektion 5 mittels zweier Projektoren 2a und 2b dargestellt. Die von den Projektoren 2a und 2b erzeugten Teilbilder 4a und 4b werden auf die Projektionsfläche 3 projiziert, wobei zwischen den Teilbildern 4a und 4b eine Blendzone 9, in welcher sich die Teilbilder 4a und 4b überlagern, entsteht. Wie in der Fig. 4 dargestellt ist, überlagern sich in der Blendzone 9 nicht nur die Bildinhalte der Teilbilder 4a und 4b, sondern auch die Helligkeiten der Teilbilder 4a und 4b. Wie bereits beschrieben, muss diese Überlagerung der Helligkeiten durch das Blending kompensiert werden, um vom Betrachter nicht mehr störend wahrgenommen zu werden.

Hierzu kommen geeignete Verfahren zum Blending, also zur Beeinflussung der Helligkeit der Bild- oder Videosignale der Teilbilder 4a und 4b in einer geeigneten Einheit wie einem Computer oder einer Grafikkarte, zum Einsatz. Alternativ kann auch je eine optische Blendmaske 7a und 7b in den Strahlengängen 8 der Projektoren 2a und 2b zum Einsatz kommen. Derartige optische Blendmasken 7a und 7b sind in der Fig. 4 nicht gezeigt.

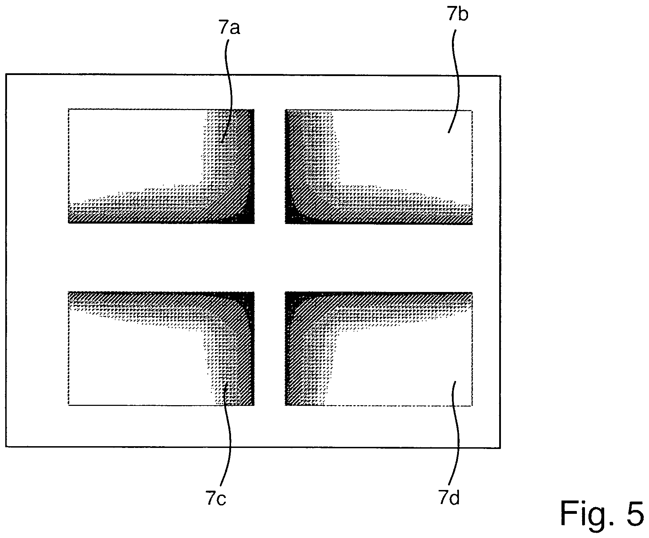

In der Fig. 5 sind vier beispielhafte optische Blendmasken 7a, 7b, 7c, 7d dargestellt. Diese vier optischen Blendmasken 7a, 7b, 7c, 7d sind für ein Projektionssystem bestimmt, welches eine großflächige Projektion 5 unter Nutzung von vier Projektoren 2a, 2b, 2c, 2d, zusammengesetzt aus vier Teilbildern 4a, 4b, 4c, 4d, erzeugt.

Die optischen Blendmasken 7a, 7b, 7c, 7d weisen entlang zweier benachbarter Kanten Bereiche auf, welche dunkle Felder aufweisen und sich L-förmig erstrecken. Mittels dieser dunklen Felder wird die Helligkeit der projizierten Teilbilder 4a, 4b, 4c, 4d auf der Projektionsfläche 3 in den Blendzonen 9 gemindert, sodass sich bei der Überlagerung der Teilbilder 4a, 4b, 4c, 4d eine gleichmäßige Helligkeit einstellt. Dieser Vorgang des Blendings wird durch unterschiedliche Deckkraft in den L-förmigen Feldern erreicht. Außerhalb der deckenden Bereiche, welche nicht innerhalb der Blendzone 9 liegen, bleiben die Blendmasken 7a, 7b, 7c, 7d lichtdurchlässig.

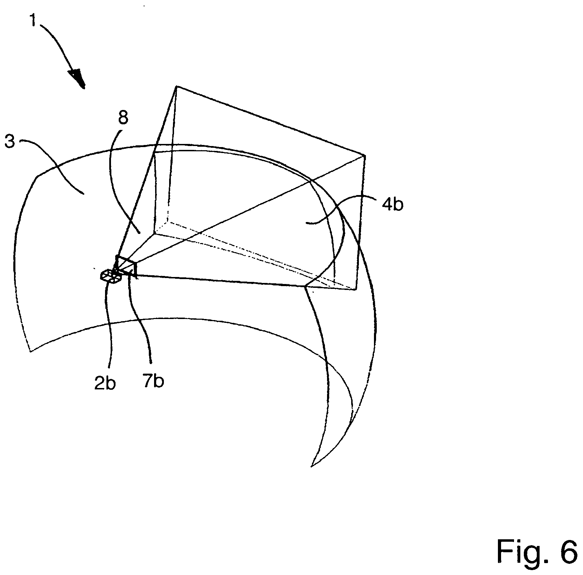

In der Fig. 6 ist ein Teil eines Projektionssystems 1 dargestellt. Im Beispiel ist der Projektor 2b eines vier Projektoren 2a, 2b, 2c, 2d umfassenden Projektionssystems 1 dargestellt. Dieser Projektor 2b projiziert das Teilbild 4b, welches den oberen rechten Anteil an der großflächigen Projektion 5 darstellt, auf die gekrümmte Projektionsfläche 3. In der Darstellung der Figur 6 ist in einer sogenannten Blendmaskenebene eine optische Blendmaske 7b im Strahlengang 8 des Projektors 2b angeordnet. Zur Befestigung der optischen Blendmaske 7b kann beispielsweise ein Rahmen vorgesehen sein, in welchem die optische Blendmaske 7b angeordnet werden kann. Dieser Rahmen wird vorzugsweise über eine Halterung fest mit dem Projektor 2b verbunden. In der Fig. 6 ist der Rahmen und die Halterung nicht dargestellt.

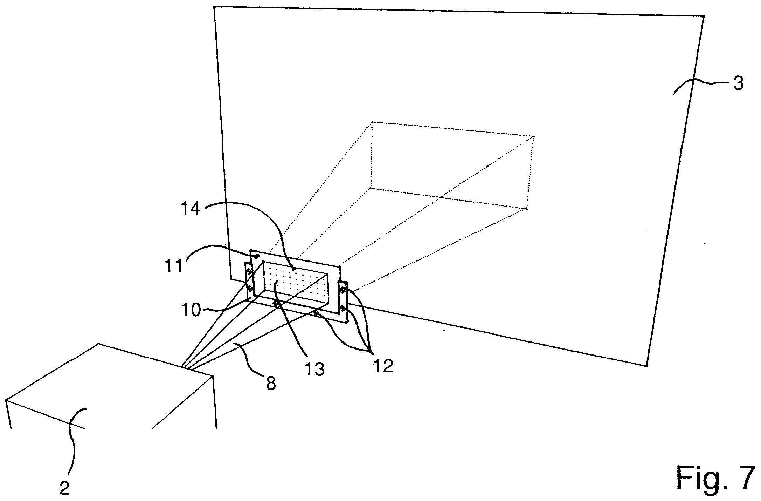

In der Fig. 7 ist eine Positionierung einer Front- oder Rückprojektionsfläche 11 in einem Rahmen 10 im Strahlengang 8 eines Projektors 2 vor einer Projektionsfläche 3 dargestellt. Die Abbildung zeigt einen vor dem Projektor 2 angeordneten beispielsweise u-förmig gestalteten Rahmen 10, welcher sowohl zur Aufnahme einer Front- oder Rückprojektionsfläche 11 als auch zur Aufnahme einer nach dem Verfahrensablauf erzeugten optischen Blendmaske 7 geeignet ist.

Der Rahmen 10, welcher nicht auf die dargestellte Form beschränkt ist, kann beispielsweise eine Nut aufweisen, in welche sowohl die Front- oder Rückprojektionsfläche 11 als auch die Blendmaske 7 eingeschoben werden kann. Der Rahmen 10 ist mit einer nicht dargestellten Halterung fest mit dem Projektor 2 oder einem anderen Fixpunkt verbunden und wird derart in seiner Position fixiert.

Auf dem Rahmen 10 werden Marken 12 angeordnet, welche ein lokales Referenzkoordinatensystem definieren. In diesem lokalen Referenzkoordinatensystem ist die Lage der Front- oder Rückprojektionsfläche 11 sowie der optischen Blendmaske 7 definiert.

In der Fig. 7 ist der Rahmen 10 mit einer Front- oder Rückprojektionsfläche 11 dargestellt, auf welcher Muster 13 projiziert werden. Diese Muster 13 können vorzugsweise Punkte sein, deren relative Position im Bezug zu einem lokalen Referenzkoordinatensystem mittels einer die Punkte aufzeichnenden Kamera sowie einer nicht dargestellten Rechen- und Steuereinheit bestimmt wird.

Auf der im Strahlengang 8 des Projektors 2 angeordneten Front- oder Rückprojektionsfläche 11 ist eine abgebildete Projektionsfläche 14 dargestellt, welche entsteht, wenn der Projektor 2 ein Teilbild 4 auf die Projektionsfläche 3 projiziert. Diese in der Blendmaskenebene liegende abgebildete Projektionsfläche 14 wird in ihrer Lage und Ausrichtung innerhalb der Blendmaskenebene verfahrensgemäß erfasst und dient bei der Erzeugung der Daten für die optischen Blendmaske (7) der präzisen Ausrichtung der optischen Blendmaske (7) innerhalb der Bildmaskenebene.

## Patentansprüche

1. Verfahren zur automatischen Erzeugung einer optischen Blendmaske (7) je Projektor (2), welche im Strahlengang (8) eines Projektors (2), in einem mindestens zwei Projektoren (2) umfassenden Projektionssystem (1), angeordnet wird, mit den folgenden Schritten:
- Bestimmung eines geometrisch verzerrten Ist-Zustandes des Projektionssystems (1) durch ein Einmessen, also das Erfassen des realen Ist-Zustandes des Projektionssystems (1),
- Erzeugung eines idealen Blendings, auf der Grundlage des Einmessens, welches eine absolut fehlerfreie Projektion eines Teilbildes (4) durch Beeinflussung der Helligkeit der Bild- oder Videosignale der Teilbilder (4) ermöglichen würde,
- Ermittlung einer individuellen Verzeichnung für jedes vom Projektor (2) zu projizierendes Teilbild (4), welche durch Ungenauigkeiten bei der Fertigung einer Linse oder mehrerer Linsen eines Projektors (2) hervorgerufen wird, mittels einer im Strahlengang (8) des Projektors (2) in einer Blendmaskenebene, welche vor jedem Projektor (2) an einer Stelle im Strahlengang (8) des jeweiligen Projektors (2) liegt, an welcher die zu erzeugende optische Blendmaske (7) eingesetzt werden soll, eingebrachten Front- oder Rückprojektionsfläche (11) unter Nutzung von Mustern (13), aus denen Punkte abgeleitet werden,
wobei die Ausrichtung und die Position der Front- oder Rückprojektionsfläche (11), welche innerhalb der Blendmaskenebene eingebracht ist, in Bezug auf Marker (12) an einem Rahmen (10), welche ein lokales Referenzkoordinatensystem bilden, ermittelt werden, und wobei die Position der Punkte im lokalem Referenzkoordinatensystem bestimmt wird,
- Berechnung eines optischen Blendings für jedes vom Projektor (2) zu projizierendes Teilbild (4),
wobei das ideale Blending auf die Blendmaskenebene positioniert und/oder transformiert wird,
wobei das ideale Blending zur Kompensation einer Weichzeichnung im Strahlengang (8) angepasst wird,
wobei die zu erzeugende optische Blendmaske (7) in der Blendmaskenebene und nicht in einer Fokusebene des Projektors (2) eingesetzt wird, und
wobei die ermittelte, individuelle Verzeichnung des Projektors (2) auf das berechnete optische Blending angewandt wird,
- Ermittlung von Daten auf der Basis vom optischen Blending und
- Erzeugung der optischen Blendmaske (7) auf der Basis von den ermittelten Daten.

2. Verfahren nach Anspruch 1,
wobei die Ermittlung der individuellen Verzeichnung des Projektors (2) folgende Schritte umfasst:
- Projektion von den Mustern (13), aus denen die Punkte abgeleitet werden,
- Aufnahme der aus den Mustern (13) abgeleiteten Punkte, beispielsweise mittels einer Kamera und
- Zuordnung der aufgenommenen Punkte zu den projizierten Punkten.

3. Verfahren nach Anspruch 1,
wobei die Berechnung des optischen Blendings auch die Verfahrensschritte einer iterativen Optimierung der Daten der erzeugten optischen Blendmaske (7) umfasst,
bei welcher eine ideale Abbildung des optischen Blendings auf der Projektionsfläche (3) simuliert und mit einem unter Anwendung der Daten der bisher erzeugten optischen Blendmaske (7) zu erwartenden optischen Blending verglichen wird, um die Abweichungen zwischen der idealen Abbildung des optischen Blendings und dem zu erwartenden optischen Blending zu verringern.

4. Verfahren nach einem der Ansprüche 1 bis 3,
wobei die Daten zur Erzeugung der optischen Blendmaske (7) Informationen über die Anzahl der horizontal und vertikal in der optischen Blendmaske (7) angeordneten Pixel sowie deren Intensität, mit welcher eine Helligkeitsreduzierung erfolgt, auf der Blendmaske (7) beinhalten.

5. Verfahren nach einem der Ansprüche 1 bis 4,
wobei die erzeugte optische Blendmaske (7) an der Stelle im Strahlengang (8) des Projektors (2) eingesetzt wird, an welcher die Front- oder Rückprojektionsfläche (11) zur Ermittlung de individuellen Verzeichnung des Projektors (2) positioniert war.

6. Verfahren nach einem der Ansprüche 1 bis 5,
wobei die Daten zur Erzeugung der optischen Blendmaske (7) für zwei oder mehr optische Blendmasken (7) ermittelt werden.

7. Verfahren nach einem der Ansprüche 1 bis 6,
wobei mit den ermittelten Daten zur Erzeugung der optischen Blendmaske (7) ein Druckverfahren zur Herstellung einer gedruckten optischen Blendmaske (7) gesteuert wird.

8. Verfahren nach einem der Ansprüche 1 bis 6,
wobei mit den ermittelten Daten zur Erzeugung der optischen Blendmaske (7) ein die optische Blendmaske (7) abbildendes, vom Licht des Projektors (2) durchdrungenes Display angesteuert wird.

## Claims

1. Method for automatically generating an optical blend mask (7) per projector (2), which blend mask is arranged in the beam path (8) of a projector (2) in a projection system (1) comprising at least two projectors (2), including the following steps:
- determining a geometrically distorted actual state of the projection system (1) by a measurement, i.e., the capture of the real actual state of the projection system (1),
- on the basis of the measurement, generating an ideal blending which would facilitate an absolutely error-free projection of a partial image (4) by influencing the brightness of the image or video signals of the partial images (4),
- ascertaining an individual distortion for each partial image (4) to be projected by the projector (2), said distortion being caused by inaccuracies during the manufacture of a lens or of a plurality of lenses of a projector (2), by means of a front or back projection surface (11) introduced in the beam path (8) of the projector (2) in a blend mask plane which is located in front of each projector (2) at a location in the beam path (8) of the respective projector (2) at which the optical blend mask (7) to be generated should be used, using patterns (13) from which points are derived,
wherein the alignment and the position of the front or back projection surface (11) which is introduced within the blend mask plane is ascertained in relation to markers (12) on a frame (10), which form a local reference coordinate system, and
wherein the position of the points is determined in the local reference coordinate system,
- calculating an optical blending for each partial image (4) to be projected by the projector (2),
wherein the ideal blending is positioned and/or transformed on the blend mask plane, wherein the ideal blending is adjusted to compensate for a blur in the beam path (8), wherein the optical blend mask (7) to be generated is used in the blend mask plane and not in the focal plane of the projector (2), and
wherein the ascertained individual distortion of the projector (2) is applied to the calculated optical blending,
- ascertaining data on the basis of the optical blending, and
- generating the optical blend mask (7) on the basis of the ascertained data.

2. Method according to Claim 1,
wherein the ascertainment of the individual distortion of the projector (2) comprises the following steps:
- projecting the patterns (13) from which the points are derived,
- recording the points derived from the patterns (13), for example by means of a camera, and
- assigning the recorded points to the projected points.

3. Method according to Claim 1,
wherein the calculation of the optical blending also comprises the method steps of an iterative optimization of the data of the generated optical blend mask (7), wherein an ideal image representation of the optical blending on the projection surface (3) is simulated and compared to an optical blending to be expected by applying the data of the optical blend mask (7) generated up to this point, in order to reduce the deviations between the ideal image representation of the optical blending and the optical blending to be expected.

4. Method according to any one of Claims 1 to 3, wherein the data for generating the optical blend mask (7) contain information about the number of pixels arranged horizontally and vertically in the optical blend mask (7) and the intensity of said pixels, with which there is a brightness reduction, on the blend mask (7).

5. Method according to any one of Claims 1 to 4, wherein the generated optical blend mask (7) is used at the location in the beam path (8) of the projector (2) at which the front or back projection surface (11) for ascertaining the individual distortion of the projector (2) was positioned.

6. Method according to any one of Claims 1 to 5, wherein the data for generating the optical blend mask (7) are ascertained for two or more optical blend masks (7).

7. Method according to any one of Claims 1 to 6, wherein a printing method for producing a printed optical blend mask (7) is controlled by the ascertained data for generating the optical blend mask (7).

8. Method according to any one of Claims 1 to 6, wherein a display which is penetrated by the light of the projector (2) and which images the optical blend mask (7) is controlled by the ascertained data for generating the optical blend mask (7).

## Revendications

1. Procédé de production automatique d'un masque de fusion optique (7) par projecteur (2) qui est disposé sur le trajet des rayons (8) d'un projecteur (2) dans un système de projection (1) comprenant au moins deux projecteurs (2), comprenant les étapes suivantes consistant à :
- déterminer un état effectif géométriquement déformé du système de projection (1) par une mesure, c'est-à-dire la détection, de l'état effectif réel du système de projection (1),
- produire une fusion idéale sur la base de la mesure qui permettrait une projection absolument sans défaut d'une trame (4) par l'influence de la luminosité des signaux d'image ou de vidéo des trames (4),
- établir une distorsion individuelle pour chaque trame (4) à projeter par le projecteur (2), qui est provoquée par des imprécisions lors de la fabrication d'une lentille ou de plusieurs lentilles d'un projecteur (2), au moyen d'une surface de projection frontale ou de rétroprojection (11) introduite sur le trajet des rayons (8) du projecteur (2) dans un plan de masque de fusion qui se trouve devant chaque projecteur (2) à un endroit sur le trajet des rayons (8) du projecteur (2) respectif où le masque de fusion optique (7) à produire doit être inséré, en utilisant des motifs (13) desquels sont dérivés des points,
l'orientation et la position de la surface de projection frontale ou de rétroprojection (11) qui est introduite à l'intérieur du plan de masque de fusion étant établies par rapport à des repères (12) sur un cadre (10) qui forment un système de coordonnées de référence local, et
la position des points dans le système de coordonnées de référence local étant déterminée,
- calculer une fusion optique pour chaque trame (4) à projeter par le projecteur (2), la fusion idéale étant positionnée et/ou transformée sur le plan de masque de fusion,
la fusion idéale étant adaptée pour compenser un effet de flou sur le trajet des rayons (8), le masque de fusion optique (7) à produire étant inséré dans le plan de masque de fusion et non pas dans un plan focal du projecteur (2), et
la distorsion individuelle établie du projecteur (2) étant appliquée à la fusion optique calculée,
- établir des données sur la base de la fusion optique, et
- produire le masque de fusion optique (7) sur la base des données établies.

2. Procédé selon la revendication 1, dans lequel l'établissement de la distorsion individuelle du projecteur (2) comprend les étapes suivantes consistant à :
- projeter des motifs (13) desquels sont dérivés des points,
- enregistrer les points dérivés des motifs (13), par exemple au moyen d'une caméra, et
- attribuer les points enregistrés aux points projetés.

3. Procédé selon la revendication 1,
le calcul de la fusion optique comprenant également les étapes de procédé d'une optimisation itérative des données du masque de fusion optique (7) produit,
au cours de laquelle une représentation idéale de la fusion optique est simulée sur la surface de projection (3) et est comparée à une fusion optique attendue en appliquant les données du masque de fusion optique (7) produit jusque-là afin de diminuer les écarts entre la représentation idéale de la fusion optique et la fusion optique attendue.

4. Procédé selon l'une quelconque des revendications 1 à 3, dans lequel les données pour produire le masque de fusion optique (7) contiennent des informations concernant le nombre des pixels disposés horizontalement et verticalement dans le masque de fusion optique (7) ainsi que leur intensité sur le masque de fusion (7) à laquelle une réduction de luminosité est effectuée.

5. Procédé selon l'une quelconque des revendications 1 à 4, dans lequel le masque de fusion optique (7) produit est inséré à l'endroit sur le trajet des rayons (8) du projecteur (2) où la surface de projection frontale ou de rétroprojection (11) était positionnée pour établir la distorsion individuelle du projecteur (2) .

6. Procédé selon l'une quelconque des revendications 1 à 5, dans lequel les données pour produire le masque de fusion optique (7) sont établies pour deux ou plusieurs masques de fusion optiques (7).

7. Procédé selon l'une quelconque des revendications 1 à 6, dans lequel les données établies pour produire le masque de fusion optique (7) permettent de commander un procédé d'impression pour fabriquer un masque de fusion optique (7) imprimé.

8. Procédé selon l'une quelconque des revendications 1 à 6, dans lequel les données établies de production du masque de fusion optique (7) permettent de piloter un écran d'affichage représentant le masque de fusion optique (7), pénétré par la lumière du projecteur (2).
